# EUROPEAN PATENT APPLICATION

(11) **EP 1 253 745 A2**
(43) Date of publication of application: **30.10.2002**
(21) Application number: 02007392.0
(22) Date of filing: 10.04.2002
(51) Int. Cl.: H04L 12/18

(54) **Facilitating simultaneous download of a multicast file to a plurality of end users**

(30) Priority: 24.04.2001 US 286212; 18.01.2002 US 51475
(71) Applicant: ALCATEL, 75008 Paris (FR)
(72) Inventor: Keller-Tuberg, Stefan, Raleigh, NC 27612 (US)
(74) Representative: Dreiss, Fuhlendorf, Steimle & Becker

(57) **Abstract**

A method for facilitating multicasting of a file to a plurality of end users is disclosed herein. The method includes an operation for multicasting control service information for reception by a plurality of end user download devices and an operation for receiving a plurality of requests for reception of offered content designated in the control service information. The requests are received from a group of the end user download devices. In response to receiving the requests, an operation is performed for multicasting the offered content for reception by each one of said end user download devices in the group. A multicast-capable distribution network facilitates multicasting of the control service information, facilitates receiving the requests for reception and facilitates multicasting the offered content.

## Description

### CROSS REFERENCE TO RELATED APPLICATIONS

This application claims the benefit of United States Provisional Patent Application having serial number 60/286,212 filed April 24, 2001 entitled "ARCHITECTURE AND CONTROL SYSTEM FOR MULTICAST FILE DOWNLOAD", of common assignee herewith.

### FIELD OF THE DISCLOSURE

The disclosures made herein relate generally to multicast file download techniques and more particularly to facilitating simultaneous download of a multicast file to a plurality of end user download devices.

### BACKGROUND

In order to simultaneously download many different files, a common solution is to use a unicast peer-to-peer transfer protocol such as FTP, TFTP or another reliable transfer mechanism. Such unicast peer-to-peer approaches avoid multicast altogether. Because a peer-to-peer protocol is a one-to-one file transfer protocol, a separate download session is required for each end user. When the number of end users is very large (e.g. hundreds of thousands and more), a centralized server and associated transport network must be capable of supporting a considerable number of simultaneous downloads. Supporting such a considerable number simultaneous downloads via a peer-to-peer protocol in an efficient and economic manner is difficult.

Multicast download techniques have been implemented in applications such as cable and satellite networks for some time. To scale such multicast download techniques to support large number of end user devices, multiple files are generally downloaded sequentially. Sequential transfers work relatively well when the bit rate of the network is relatively high compared with the overall size of the files or program streams to be downloaded and the number of different files is relatively small. However, sequential techniques are generally impractical when, for example, there are many individual files that are hundreds of Megabytes or larger in size and the speed of the slowest link in the network is only a few Megabits per second or slower. An example of such a slower network is ADSL and an example of such relatively large files are MPEG-2 and MPEG-4 compressed feature length videos.

Sequential distribution of feature length videos and other similarly lengthy content is impractical on ADSL based networks for several reasons. For example, unicast techniques quickly exhaust or deplete backbone network and server capacity when there are a large number of end users requiring a copy of the file to be downloaded. This situation is exacerbated when there are a large number of potential files to download (which would deplete network resources for a correspondingly longer interval) and each end user requires only a small subset of the available files.

Conventional multicast techniques often rely on a bi-directional control path between an end user download device and a centralized control server. Such conventional multicast techniques allow for communication to be facilitated directly between the end user download device and the centralized control server. In network applications that need to be scaled to support hundreds of thousands or even millions of end user download devices, a bi-directional control path is often problematic because of the correlated nature of the bi-directional control traffic leading to network and control processor overloads. For example, if the centralized control server were to multicast a command indicating that all end user download devices should receive and download a particular program or file, a bi-directional control link between the centralized control server and the end user download devices would require that potentially millions of end user download devices contact the centralized control server in a short space in time. Accordingly, difficulties in handling traffic correlation situations would likely arise.

There are several known ways of dealing with such scalability problems. Typically, techniques are deployed such as replicating the number of servers and / or reducing the number of end user download devices able to receive any one download. Both of these solutions tend to adversely affect effectiveness of a system by increasing network transmission requirements and, thus cost or increasing access latency.

Therefore, facilitating simultaneous downloading of a multicast file to a plurality of download apparatuses in a manner than overcomes limitations associated with conventional techniques for downloading multicast files is useful.

### BRIEF DESCRIPTION OF THE DRAWINGS

FIG. 1 is a block diagram view depicting a centralized multicast system capable of facilitating multicasting of a file in accordance with an embodiment of the disclosures made herein.

FIG. 2 is a block diagram view depicting a distributed multicast system capable of facilitating multicasting of a file in accordance with an embodiment of the disclosures made herein.

FIGS. 3A and 3B are flow chart views depicting a method capable of facilitating multicasting of a file in accordance with an embodiment of the disclosures made herein.

### DETAILED DESCRIPTION OF THE FIGURES

The disclosures made herein pertain to various aspects of facilitating simultaneous download of a file to a plurality of end user download devices. In accordance with embodiments of the disclosures made herein, both control and download of files are facilitated in a multicast manner by a multicast server apparatus. Furthermore, there is no requirement for end-to-end dialogue between the end user download devices and the multicast server apparatus. Accordingly, embodiments of the disclosures made herein may be scaled to support simultaneous download of a multicast file to an essentially unbound number of end user download devices.

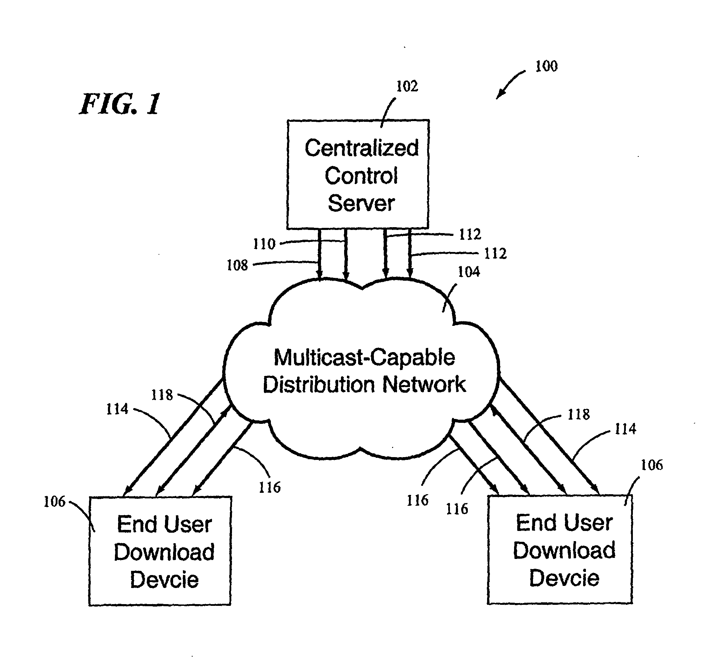

FIG. 1 depicts a centralized multicast system 100 capable of facilitating download of a multicast by a plurality of end user download devices in accordance with an embodiment of the disclosures made herein. The centralized multicast system 100 includes a centralized control server 102, a multicast-capable distribution network 104 and a plurality of end user download devices 106. A multicast server apparatus comprises the centralized control server 102 and other components such as one or more data storage units. The multicast-capable distribution network 104 is connected between the centralized control server 102 and each one of the plurality of end user download devices 106.

An Internet Protocol (IP) network controlled by Internet Group Management Protocol (IGMP) is an example of the multicast-capable distribution network 104. A server capable of providing multicast functionality is an example of the centralized control server 102. User controllable devices capable of enabling various types of connections with the multicast-capable distribution network 104 to be established is an example of the end user download devices 106.

The Internet Group Management Protocol (IGMP) is an example of a signalling protocol that is used to establish and clear down multicast connections. The IGMP as defined in IETF "RFC-2236", which superseded "RFC-1112", is a known and broadly standardized protocol for managing multicast connections in data networks (e.g. the multicast-capable distribution network 104). The IGMP is widely implemented in existing switches, routers and end user equipment.

The centralized control server 102 and the multicast-capable distribution network 104 are each capable of providing functionality imparted by a protocol such as the IGMP. Accordingly, the centralized control server 102 is capable of transmitting one copy of a transmission (e.g. content files, service control information, etc.) for reception by the plurality of end user download devices 106 and an unlimited number of the end user download devices 106 are capable of receiving such transmission. These transmissions travel from the centralized control server 102 toward each one of the end user download devices 106 via the multicast-capable distribution network 104. In accordance with embodiments of the disclosures made herein, it is the responsibility and capability of multicast-capable distribution network 104, not the centralized control server 102, to manage efficient replication and distribution of multicast information. This capability is one aspect that contributes to providing scalability of systems in accordance with embodiments of the disclosures made herein.

The centralized control server 102 transmits information for reception by the multicast-capable distribution network 104. Service control information is transmitted for reception by the multicast-capable distribution network 104 via an upstream service control connection 108. Multicast routing information is transmitted for reception by the multicast-capable distribution network 104 via a routing information connection 110. A plurality of content files is transmitted for reception by the multicast-capable distribution network 104 via corresponding upstream content download connections 112.

Both the upstream service control connection 108 and the upstream content download connections 112 support multicasting. The centralized control server 102 transmits a single copy of the service control information and a single copy of each one of the plurality of content files. The multicast-capable distribution network 104 is capable of replicating the single copy of the service control information (i.e. replicated service control information) and replicating the single copy of the content files (i.e. replicated content files). The multicast-capable distribution network 104 is also capable of forwarding the replicated service control information and the replicated content files for reception by each one of the end user download devices 106.

The replicated service control information and the replicated content files are transmitted via a downstream service control connection 114 and downstream content download connections 116, respectively, associated with each one of the end user download devices 106. From the perspective of the end user download devices 106, the downstream content download connections 116 are temporary connections and remain in effect only for the life of each specific download. The downstream service control connections 114 are permanent connections maintained so long as service to a respective end user download device 106 is desired.

Reception of the service control information is mandatory for any one of the end user download devices 106 that participate in a multicast service session. Participation in the downstream service control connection 114 remains established for the life of the multicast service session. If the downstream service control connection 114 is for some reason interrupted, appropriate steps are taken to automatically re-establish the downstream control connection 114 as soon as possible.

The service control information facilitates advertising content file availability to the end user download devices 106. Examples of the service control information include the identity of the plurality of file download streams, when the file downloads are expected to commence, the address that an end user download device uses to connect to a particular download stream and other information. The upstream service control connection 108 enables transmission of service control information from the centralized control server 102 for reception by the multicast-capable distribution network 104. The downstream service control connection 114 enables transmission of service control information from the multicast-capable distribution network 106 for reception by each one of the end user download devices 106.

When an end user acts to download a particular one or more content files using their end user download device, the end user download device must first be a member of a control multicast group. In response to such action, a bi-directional group membership connection 118 is established between the multicast-capable distribution network 104 and a corresponding one of the end user download devices 106. The end user download devices 106 first become members of the control group. The control group is only used for distributing the control stream between the centralized control server 102 and all end user download devices 106. Then, as required and desired, each end user download device 106 becomes a member of a file-specific multicast group at the prescribed future time(s). At the conclusion of a download session, the end user download device 106 leaves the file-specific multicast group. At all times, the end user download devices 106 work to maintain their membership in the control group. The centralized control server 102 does not, at any time, participate in any end-user specific control dialogue. The centralized control server 102 remains unaware of the end user download devices 106 that are presently members of any of its groups. There may however be additional servers within the network that are tasked with tracking group memberships for the purpose of billing, access control, etc.

The centralized control server 102 transmits group membership information to the members of this control multicast group. Examples of such group membership information includes names and/or titles of available content files, times associated with when end user download devices 106 should connect with/disconnecting from the multicast-capable distribution network 104 for receiving a particular content file, times associated with when future streams containing particular content files will commence, repeat and/or stop cycling, the network address a downloaded content file may be found upon, information associated with a download protocol, the end user cost for downloading a particular content file, etc.

An example of a protocol that may be used to format the service control information for being transmitted on the service control connection is the Session Description Protocol (RFC-2327). Modifications may be introduced to this protocol to, for example, convey detailed information about the ATM traffic descriptor of each stream to simplify automated connection establishment through ATM based ADSL networks. On the assumption that the centralized control server 102 will be streaming numerous content files in parallel, each one of the end user download devices 106 is capable of simultaneously being a member of more than one control multicast group, thus receiving more than one simultaneous download.

In accordance with embodiments of the disclosures made herein, the centralized multicast system 100 is capable of facilitating download of files from the centralized control server 102 to the plurality of end user download devices 106 without direct interaction therebetween. The multicast-capable distribution network 104 facilitates communications between the centralized control server 102 and the plurality of end user download devices 106. Accordingly, from the perspective of the end user download devices, the centralized control server 102 is a transmit-only device.

It is preferable that a simple, yet effective, mechanism be implemented so that the centralized control server 102 is capable of informing the multicast-capable distribution network 104 about which content files are being transmitted by the centralized control server 102 for reception by the multicast-capable distribution network 104. For example, a multicast routing protocol such as Distance Vector Multicast Routing Protocol (i.e. RFC-1075) or Protocol Independent Multicast (RFC's 2117, 2362 and other documents) could be used to inform the multicast-capable distribution network about changes in streaming content (i.e. streams of content files) carried on the upstream and downstream content download connections (112, 116).

The transmission of the streaming content from the centralized control server 102 takes place in parallel across the plurality of upstream and downstream content download connections (112, 116). In such cases, each one of the upstream and downstream content download connections (112, 116) has a unique identifier associated with it. The total number of parallel streams of content files is constrained by the aggregate capacity of the multicast-capable distribution network 104 and aggregate capacity of the multicast-capable distribution network 104 connection at the centralized control server 102. It is not a requirement that all potential streams of content files are multicast together, but system architecture in accordance with embodiments of the disclosures made herein does not intrinsically preclude such multicast if it is desirable.

The end user download devices 106 are semi-permanently configured to receive the service control information via the downstream service control connection 114. When one or more of the end user download devices 106 is instructed to receive one of the advertised content files, the one or more of the end user download devices 106 uses service control information that it has received via the downstream service control connection 114. The service control information facilitates communication with the multicast-capable distribution network 104 to dynamically connect to and disconnect from a particular one of the downstream content download connections 116. Accordingly, as mentioned above, none of the end user download devices 106 need to communicate directly with the centralized control server 102 to establish or clear a corresponding one of the downstream content download connections 116.

Multicast download architecture in accordance with at least one embodiment of the disclosures made herein is capable of identifying and recovering from loss of information and other errors associated with the service control information and content files. Examples of loss of information and errors include missing and reordered packets. Such multicast architecture is capable of operating with any generalized unidirectional download protocol that provides error tolerance. In this manner, content files or service control information may be downloaded to a virtually unlimited number of the end user download devices 106 without the need for the centralized control server 102 to explicitly and/or directly receive return acknowledgements or negative acknowledgements.

In one embodiment of such multicast download architecture, the centralized control server 102 is capable of encoding the service control information transmitted via the upstream and downstream service control connections (108, 114) in an error tolerant manner. There are several well-known techniques for improving the reliability of unicast or pseudo-unicast connections including the transmission of various Forward Error Correction codes or the periodic retransmission of messages to be protected.

In one embodiment of the control service information, the control service information is formatted to provide a 'Multicast Program Guide'. An end user may view the multicast program guide for learning about titles of content files available for download and/or viewing. The end user may then, for example, program preferences into its respective end user download device to indicate which of the available content files the end user would like to download. Accordingly, at the next opportunity, their end user download device is able to automatically download the content file(s) specified in their preferences.

In another embodiment of the control service information, the control service information is capable of being accessed via a designated website. In this embodiment, the end user accesses the designated website containing the equivalent of the multicast program guide. From the website, the end user may receive information for determining which of the available content files the end user would like to download. For example, an end user may obtain a program guide from the website and use information contained in the program guide for enabling their download device to automatically download the indicated content file(s) specified in their preferences.

In the case of a preference-based download, when a particular one of the end user download devices 106 (i.e. the particular end user download device) receives a control message indicating that a stream including an available content file is about to commence, the particular end user download device determines whether it has been configured to receive the available content file. If it has been configured to receive the available content file, the particular end user download device will attempt join a multicast group for the available content file when prompted by the centralized control server 102.

In order to control, manage or limit storage of automatically downloaded files, the centralized control server 102 may issue messages designed to facilitate automated file deletion and/or modification by the particular end user download device. An example of this capability could be if the terms of the original download included a time limit after which the end user agrees to allow the multicast-capable distribution network 104 to modify or delete and/or modify files.

Even though the centralized control server 102 is not required to receive any traffic from the end user download devices 106, each one of the end user download devices 106 must still communicate with the multicast-capable distribution network 104 in order to establish and clear down one or more of the downstream content download connections 116. A potential problem may arise at certain components (e.g. routers) of the multicast-capable distribution network 104 if too many end users simultaneously respond that they wish to join a particular control multicast group. The primary cause of such a problem is that the correlated nature of the requests to join the particular control multicast group leads to an overload of the certain components of the multicast-capable distribution network 104.

The probability of congestion or overload can be minimized by requiring each one of the end user download devices 106 to send an IGMP membership report requesting a copy of the content file stream at a random instant within a specified interval immediately preceding the transmission of the requested stream (i.e. the preceding interval). To this end, it is also required that each one of the end user download devices 106 have their clock synchronized with that of the multicast-capable distribution network 104.

### Example - Congestion Avoidance

A specified preceding interval is 90 seconds. The centralized server apparatus and all of the end user download devices in a control multicast group have their clocks synchronized with an accuracy of about 1 second with respect to a multicast-capable distribution network. The clocks are synchronized using the Network Time Protocol (NTP). The service provider advertises the commencement of a particular movie (i.e. a content file) at 7:00pm on a particular date by specifying this information in service control information received by the end user download devices.

The end user download devices are configured to receive a copy of the content file. The end user download devices wait until 6:58:25pm and then wait again for a random interval between 0 seconds and 90 seconds before sending a first IGMP membership report. Accordingly, the content file is downloaded to each one of the end user download devices. The additional five seconds of interval than 6:58:30 is to accommodate the fact that the IGMP exchange requires a finite processing interval and also the fact that the Internet Protocol is unreliable. Thus, the first IGMP membership report could be lost and thus require retransmission.

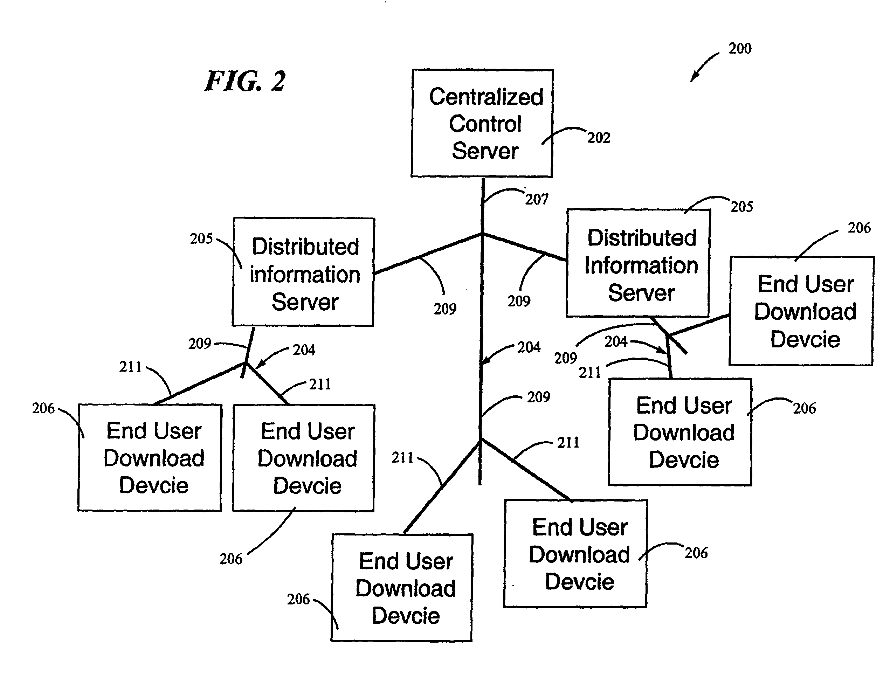

FIG. 2 depicts a distributed multicast system 200 capable of facilitating download of a multicast by a plurality of end user download devices in accordance with an embodiment of the disclosures made herein. The distributed multicast system 200 is centrally coordinated. By centrally coordinated, it is meant that control of the distributed multicast system 200 emanates from a central location.

The distributed multicast system 200 includes a centralized control server 202, a multicast-capable distribution network 204, a plurality of distributed information servers 205 and a plurality of end user download devices 206. A multicast server apparatus comprises the centralized control server 202, the plurality of distributed information servers and other components such as one or more data storage units. The multicast-capable distribution network 204 includes a root portion 207, branch portions 209 and stem portions 211. The centralized control server 202 is connected to the multicast-capable distribution network at the root portion 207. Each one of the end user download devices 204 is connected to the multicast-capable distribution network 204 at a stem portion 211. Each one of the distributed information servers 205 is connected to the multicast-capable distribution network 204 at a positioned between the trunk portion 207 and one of the stem portions 211 (i.e. at a branch portion 209 or stem portion 211) of the multicast-capable distribution network 204.

A service control connection facilitates synchronization of the various servers (202, 204). Accordingly, to one of the end user download devices 206, functionality associated with the centralized multicast server 202 and the distributed information servers 204 is essentially indistinguishable from the centralized multicast system 100. Furthermore, because service control connections require low processing capacity, the cost of distributing service control information is relatively inexpensive.

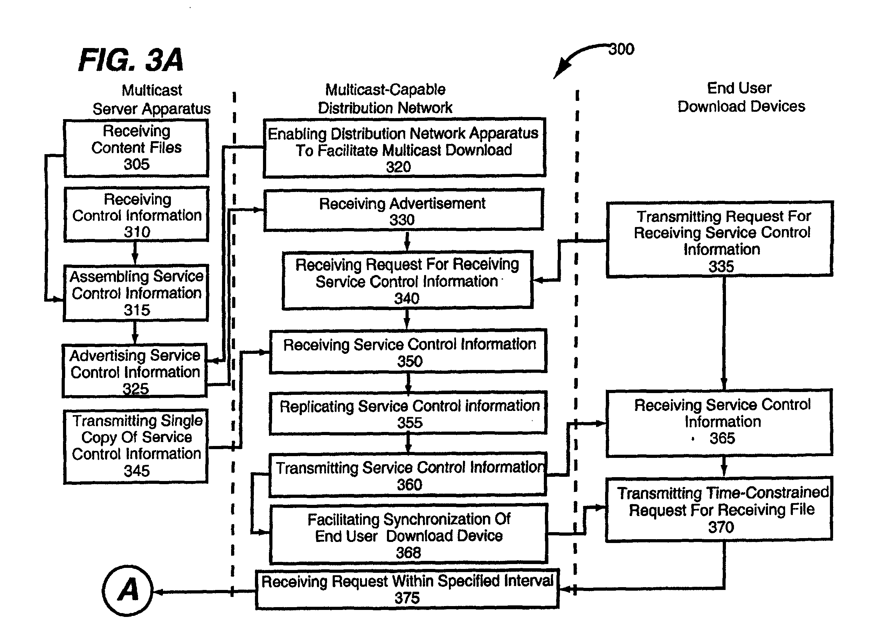

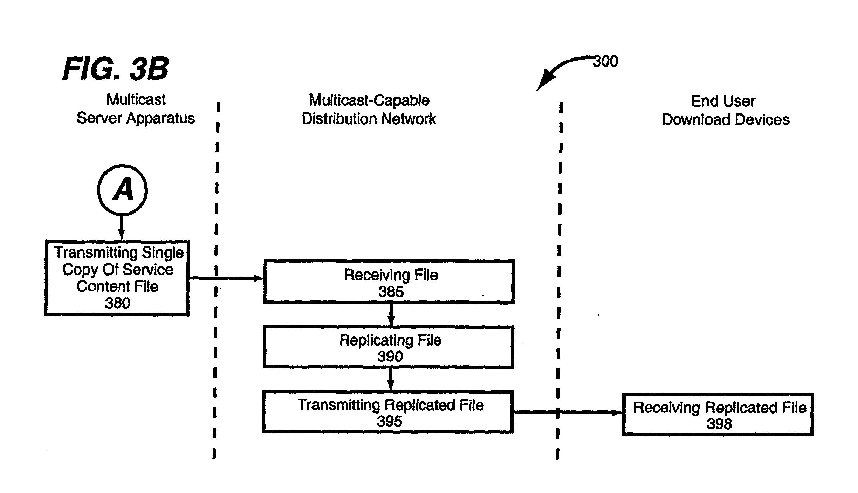

FIGS. 3A and 3B depict a method 300 for providing multicast download functionality in accordance with an embodiment of the disclosures made herein. The centralized multicast system 100 and the distributed multicast system 200 are each capable of carrying out the method 300. It is contemplated herein that other known and newly discovered systems not disclosed herein will also be capable of carrying out the method 300.

The method 300 includes an operation 305 for receiving downloadable information (e.g. content files) and an operation 310 for receiving service control information. Examples of service control information include, but are not limited to, a multicast identity (e.g. an IP class D address) for each content file, scheduling information (e.g. when to commence each download), protocol related information (e.g. what form of multicast encapsulation shall be used for each file, what is the maximum transfer unit, transmission related information (e.g. how to shape the traffic, at what rate to send it), information to be explicitly advertised by the service control connection, etc. After performing the operation for receiving downloadable information and the operation 310 for receiving service control information, an operation 315 is performed for assembling service control information that includes at least a portion of the downloadable information and at least a portion of the service control information.

Assembling a service control stream is an example of assembling service control information. The operations discussed above are each facilitated by a multicast server apparatus.

After performing the operation 315 for assembling service control information and after performing an operation 320 for enabling the multicast-capable distribution network to facilitate multicasting of the content files and the service control information, the multicast server apparatus performs an operation 325 for advertising availability of available content files and the service control information throughout the multicast-capable distribution network. In response, the multicast-capable distribution network performs an operation 330 for receiving the advertised availability of the available content files and service control information.

A first embodiment of enabling the multicast-capable distribution network to facilitate multicast download includes the multicast-capable distribution network being statically configured for routing the control service information along pre-defined paths within the multi-cast capable distribution network. A second embodiment of enabling the multicast-capable distribution network to facilitate multicast download includes the multicast-capable distribution network being configured for dynamically enabling access to the service control service information by downstream apparatuses (e.g. servers, routers, etc.). In such an embodiment where the multicast-capable distribution network is configured for dynamically enabling access to the service control service information, the centralized control server, any distributed control servers and the multicast-capable distribution network support a multicast routing protocol such as Distance Vector Multicast Routing Protocol (DVMRP), Protocol Independent Multicast (PIM), Multicast extensions to Open Shortest Path First (RFC-1584) (MOSPF), etc. Accordingly, network elements down stream of the centralized server would be able to dynamically learn of the availability of particular multicast streams.

At this point in the method 300, the multicast server apparatus has been populated with content files and the availability of such content files has been advertised throughout the multicast-capable distribution network. Next, a plurality of end user download devices each perform an operation 335 for transmitting a request for receiving a copy of the service control information. An IGMP membership report is an example of the request for receiving the service control information. In at least one embodiment of the multicast-capable distribution network, the multicast-capable distribution network processes each IGMP message to verify that the corresponding one of the end user download devices is authorized to receive the service control information. In response to receiving the request(s) for receiving the copy of the service control information, an operation 340 is performed by the multicast-capable distribution network for receiving the request(s).

The multicast server apparatus performs an operation 345 for transmitting a single copy of the service control information for reception by the multicast-capable distribution network. It should be understood that a single copy of the service information is transmitted at regular intervals (i.e. periodically transmitted). It should be understood that this multicast technique differs from unicast techniques in which every end user download device receives a separately transmitted copy of the service control information.

In response to the multicast server apparatus performing the operation 345 for transmitting a single copy of the service control information, the multicast-capable distribution network performs an operation 350 for receiving the single copy of the service control information. The operation 345 for transmitting the single copy of the service control information and the operation 350 for receiving the single copy of the service control information may be performed prior to or in response to performing the operation 340 for receiving the request(s) for receiving the service control information. For example, the multicast-capable distribution network may already be receiving the single copy of the service control information at the time a particular request is received (i.e. another end user download device has already requested receiving a copy of the service control information).

After performing the operation 350 for receiving the single copy of the service control information and after performing the operation 340 for receiving the request for receiving the service control information, the multicast-capable distribution network performs an operation 355 for replicating the single copy of the service control information (i.e. generating replicated service control information). An operation 360 is next performed by the multicast-capable distribution network for forwarding the replicated service control information for reception by each one of the end user download devices. Subsequently, each one of the end user download devices performs an operation 365 for receiving the replicated service control information.

Operation 355 for replicating the single copy of the service control information and operation 360 for forwarding the replicated service control information implies two functions. In practice, this is generally done as a single operation. However, for clarity, these operations are depicted in a logical manner as separate functions.

After receiving the service control information and after an operation 368 is performed for facilitating synchronization of the clock of each one of the end user download devices, each one of the end user download devices performs an operation 370 for transmitting a time-synchronized file download request for reception by the multicast-capable distribution network. By time-synchronized, it is meant that a respective clock of each one of the end user download devices, the centralized control server and all playout servers is synchronized with that of the multicast-capable distribution network and that the request is transmitted after a prescribed transmission initiation period. In response to the multicast-capable distribution network performing an operation 375 for receiving the time-synchronized file download request within a specified interval of time, the multicast server apparatus performs an operation 380 for transmitting a single copy of the requested content file to the multicast-capable distribution network. Each one of the end user download devices that transmits performs the operation 370 for transmitting the time-synchronized file download request becomes a member of a multicast group.

The multicast-capable distribution network then performs an operation 385 for receiving the single copy of the requested content file, an operation 390 for replicating the single copy of the requested content file (i.e. generating a replicated content file) and an operation 395 for forwarding the replicated content file for reception by each one of the end user download device (i.e. each one of the end user download devices in the multicast group). After the multicast-capable distribution network performs the operation 395 for forwarding the replicated content file, each one of the end user download devices in the multicast group performs an operation 398 for receiving the replicated content file.

Operation 390 for replicating the replicated content file and operation 360 for forwarding the replicated content file implies two functions. In practice, this is generally done as a single operation. However, for clarity, these operations are depicted in a logical manner as separate functions.

Referring now to data processor programs in accordance with an embodiment of the disclosures made herein, a data processor program controls at least a portion of the operations associated with a multicast-capable distribution network device (e.g. a server). In this manner, the data processor program controls at least a portion of the operations necessary to facilitate multicasting in a manner according to the disclosures made herein. The term data processor program is defined herein to refer to computer software, data processor algorithms or any other type of instruction code capable of controlling operations associated with a data processor.

Specifically, such a data processor program controls at least a portion of operations associated with the methods in accordance with embodiments of the disclosures made herein (e.g. the method 100). The data processor program is processible by a data processor of one or more multicast-capable distribution network devices. The data processor programs may be resident on one or more of such multicast-capable distribution network devices and/or from an apparatus such as a diskette, a compact disk, a network storage device, a component of a communication system or other suitable apparatus.

A data processor program accessible from an apparatus by a data processor is defined herein as a data processor program product. It is contemplated herein that the data processor program product may comprise more than one data processor programs accessible from respective apparatuses. It is further contemplated herein that each one of a plurality of data processor programs may be accessed by a different respective one of a plurality of data processors. For example, a first data processor and a second data processor (e.g. of a first multicast-capable distribution network device and a second multicast-capable distribution network device) may access a first data processor program and a second data processor program, respectively, from a first apparatus and a second apparatus (e.g. a first memory device and a second memory device), respectively.

A multicast-capable distribution network in accordance with an embodiment of the disclosures made herein is a generalized data network. Such a generalized data network is capable of concurrently supporting additional data services. In this manner, one protocol is capable of governing various types of services available to the end user (e.g. billing).

The use of multicast techniques for both control and download functionality in accordance with embodiments of the disclosures made herein reduces the cost of deploying a video service. Such reduced deployment cost stems at least partially from the multicast server apparatus originating streams corresponding to both the service control information and content files, but not being required to receive and/or process any information from the end users. According, the complexity and capacity of the multicast server apparatus may be maintained at a relatively low level. Furthermore, such reduced deployment cost stems at least partially from minimizing the amount of information transfer capacity required in the network when compared with a unicast distribution solution.

Because multicast systems in accordance with embodiments of the disclosures made herein rely on a multicast server apparatus that operates in a unidirectional manner with respect to end user download devices, such multicast systems and related multicast methods may be readily scaled to support hundreds of thousands or even millions of end user download devices. A unidirectional control path is advantageous because it eliminates transmission from such hundreds of thousands or even millions of end user download devices, thus precluding control traffic to the multicast server apparatus. In this manner, the potential for the multicast server apparatus and/or associated multicast-capable distribution network to be overloaded is greatly reduced.

It is common for content owners (e.g. movie file providers) to desire protecting their content files from piracy and/or wanting to bill for their content files on a per session basis rather than on a per-download basis or per-subscription basis. One solution for protecting their content files is to encrypt the various files to be downloaded using encryption techniques. An example of a suitable encryption technique is triple Data Encryption Standard (DES). Other viable alternatives are known to those in the art and new alternatives are frequently developed.

By encrypting a file prior to download, a content file is capable of being multicasted to a broader audience with reduced concern that unauthorized end users will be able to view or other wise use the content file. The degree to which concern is reduced stems from the degree of protection afforded by the specific encryption algorithm selected.

The encryption algorithm chosen to encrypt content files and/or programs may be chosen with certain attributes applicable to an associated service. In a first approach, an encryption system that is time sensitive may be chosen so that the usefulness of a decryption key is limited to a finite time interval. One alternative approach is to use an encryption system that is sensitive to the end user playback device such that a decryption key issued for one particular playback device may not be used to decrypt the content file or program on a different playback device. Another alternate approach is for an encryption system to encompass a portion of each of one of the previous approaches. Encryption systems that introduce different and additional characteristics may become known and found to be applicable for being used in conjunction with methods, apparatuses and data processor program products in accordance with embodiments of the disclosures made herein.

End users wishing to view or otherwise use an encrypted content file must first decrypt it. For this purpose, they must first obtain a key or keys with which to configure their decryption algorithm. In one embodiment, the end users devices may be statically configured with keys such as in a smart card system. In another embodiment, the end user devices may independently contact a network based "key server" each time a file is to be decrypted. The key server could provide conditional access by restricting its issuing of keys and it could use records of the event of issuing a key to a particular end user as a means for billing the service.

Embodiments of the disclosures made herein support the simultaneous and independent selection of different encryption algorithms for each of the file or programmes to be downloaded. That is, because the choice of encryption technique and configuration is independent for each stream, the decisions influencing content file security may be left to the content owner rather than the network implementer.

An enhanced service may be offered to end users by using the information gained from the key server. For example, analysis of end user viewing habits may be periodically conducted using key server event records and on a per end user basis. Such analysis would be capable of grouping end users into particular market segments. On the basis of this segmentation, the network could automatically configure the end user's download device to respond to directives that are multicast through the multicast control channel to members of the market segment. In this manner, the centralized control server may instruct particular groups of end user download devices to automatically download movies, for example, of a certain genre where it is calculated that many of those particular end users that are members of these segment specific groups are likely to want to view that genre of movie in the near future.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. method for facilitating multicasting of a file to a plurality of end users, comprising:
multicasting control service information for reception by a plurality of end user download devices; receiving a plurality of requests for reception of offered content designated in said control service information, wherein said requests are received from a group of said end user download devices; and
multicasting said offered content for reception by each one of said end user download devices in the group;
wherein a multicast-capable distribution network facilitates multicasting of said control service information, facilitates receiving said requests for reception and facilitates multicasting said offered content.

2. The method of claim 1 wherein multicasting control service information includes:
receiving said control service information initially transmitted from a centralized control apparatus;
generating replicated versions of said control service information, wherein said replicated versions are generated by the multicast-capable distribution network; and
forwarding said replicated versions of said control service information for reception by each one of the group of said end user download devices.

3. The method of claim 2 wherein receiving said control service information from the centralized control apparatus includes receiving an unsolicited advertisement of said control service information from the centralized control apparatus.

4. The method of claim 2, further comprising:
configuring the multicast-capable distribution network to route said control service information by downstream apparatuses within the multi-cast capable network in response to receiving said control service information.

5. The method of claim 4 wherein configuring the multicast-capable distribution network includes being statically configured for routing said control service information along pre-defined paths within the multi-cast capable distribution network.

6. The method of claim 4 wherein configuring the multicast-capable distribution network includes being configured for dynamically enabling access to said control service information by downstream apparatuses within the multi-cast capable network.

7. The method of claim 1 wherein receiving the plurality of requests for reception of a file designated in said control service information includes receiving said requests within a prescribed interval of time.

8. The method of claim 7 wherein the prescribed interval of time begins at a designated time and extends for a designated duration.

9. The method of claim 7 wherein receiving the plurality of requests for reception of a file designated in said control service information includes facilitating synchronization of the group of said end user download devices for enabling reception of said requests by the multicast-capable distribution network within the prescribed interval of time.

10. The method of claim 9 wherein facilitating synchronization of the group of said end user download devices includes
synchronizing a clock of each one of said end user download devices with a reference time maintained by the multicast-capable distribution network; and
synchronizing a clock of a multicast server apparatus with the reference time maintained by the multicast-capable distribution network.

11. The method of claim 1, further comprising:
facilitating synchronization of the group of said end user download devices for enabling reception of said requests by the multicast-capable distribution network within a prescribed interval of time.

12. The method of claim 11 wherein:
receiving the plurality of requests for reception of a file designated in said control service information includes receiving said requests within the prescribed interval of time; and
the prescribed interval of time beginning at a designated time and extending for a designated duration.

13. The method of claim 1 wherein:
the multicast-capable distribution network is an Internet Protocol (IP) based distribution network; and
receiving the plurality of requests for reception includes receiving an Internet Group Management Protocol IGMP membership report from each one of the group of said end user download devices.

14. The method of claim 13, further comprising:
receiving said control service information from a centralized control apparatus in response to receiving the IGMP membership report from each one of the group of said end user download devices.

15. The method of claim 1 wherein multicasting said offered content includes:
receiving an initially transmitted copy of said offered content from a centralized control apparatus;
generating replicated versions of said offered content, wherein said replicated versions are generated by the multicast-capable distribution network; and
forwarding said replicated versions of said offered content for reception by each one of the group of said end user download devices.

16. A method for facilitating multicasting of a file to a plurality of end users, comprising:
multicasting control service information for reception by a plurality of end user download devices, wherein multicasting said control service information includes receiving said control service information initially transmitted from a centralized control apparatus, generating replicated versions of said control service information by a multicast-capable distribution network and forwarding said replicated versions of said control service information for reception by each one of the group of said end user download devices;
configuring the multicast-capable distribution network to route said control service information by downstream apparatuses within the multi-cast capable network in response to receiving said control service information;
receiving a plurality of requests for reception of offered content designated in said control service information, wherein said requests are received from a group of said end user download devices, wherein said requests are received within a prescribed interval of time; and
multicasting said offered content for reception by each one of said end user download devices in the group;
wherein a multicast-capable distribution network facilitates multicasting of said control service information, facilitates receiving said requests for reception and facilitates multicasting said offered content.

17. The method of claim 16 wherein receiving said control service information from the centralized control apparatus includes receiving an unsolicited advertisement of said control service information from the centralized control apparatus.

18. The method of claim 16 wherein configuring the multicast-capable distribution network includes being statically configured for routing said control service information along pre-defined paths within the multi-cast capable distribution network.

19. The method of claim 16 wherein configuring the multicast-capable distribution network includes being configured for dynamically enabling access to said control service information by downstream apparatuses within the multi-cast capable network.

20. The method of claim 16 wherein the prescribed interval of time begins at a designated time and extends for a designated duration.

21. The method of claim 20 wherein receiving the plurality of requests for reception of a file designated in said control service information includes facilitating synchronization of the group of said end user download devices for enabling reception of said requests by the multicast-capable distribution network within the prescribed interval of time.

22. The method of claim 21 wherein facilitating synchronization of the group of said end user download devices includes:
synchronizing a clock of each one of said end user download devices with a reference time maintained by the multicast-capable distribution network; and
synchronizing a clock of a multicast server apparatus with the reference time maintained by the multicast-capable distribution network.

23. The method of claim 16, further comprising:
facilitating synchronization of the group of said end user download devices for enabling reception of said requests by the multicast-capable distribution network within a prescribed interval of time.

24. The method of claim 23 wherein:
receiving the plurality of requests for reception of a file designated in said control service information includes receiving said requests within the prescribed interval of time; and
the prescribed interval of time beginning at a designated time and extending for a designated duration.

25. The method of claim 16 wherein multicasting said offered content includes:
receiving an initially transmitted copy of said offered content from a centralized control apparatus;
generating replicated versions of said offered content, wherein said replicated versions are generated by the multicast-capable distribution network; and
forwarding said replicated versions of said offered content for reception by each one of the group of said end user download devices.

26. A system for facilitating multicasting of a file to a plurality of end users, comprising:
a multicast-capable distribution network;
a centralized server coupled to the multicast-capable distribution network;
a plurality of end use download devices coupled to the multicast-capable distribution network; and
a data processor program;
the data processor program being capable of enabling the multicast-capable distribution network to facilitate:
multicasting control service information for reception by the plurality of end user download devices;
receiving a plurality of requests for reception of offered content designated in said control service information,
wherein said requests are received from a group of said end user download devices;
and
multicasting said offered content for reception by each one of said end user download devices in the group.

27. The system of claim 26 wherein enabling the multicast-capable distribution network to facilitate multicasting control service information includes enabling the multicast-capable distribution network to facilitate:
receiving said control service information initially transmitted from a centralized control apparatus;
generating replicated versions of said control service information, wherein said replicated versions are generated by the multicast-capable distribution network; and
forwarding said replicated versions of said control service information for reception by each one of the group of said end user download devices.

28. The system of claim 27 wherein enabling the multicast-capable distribution network to facilitate receiving said control service information from the centralized control apparatus includes enabling the multicast-capable distribution network to facilitate receiving an unsolicited advertisement of said control service information from the centralized control apparatus.

29. The system of claim 27 wherein the data processor program is further capable of enabling the multicast-capable distribution network to facilitate:
configuring the multicast-capable distribution network to route said control service information by downstream apparatuses within the multi-cast capable network in response to receiving said control service information.

30. The system of claim 29 wherein the multicast-capable distribution network is statically configured for routing said control service information along pre-defined paths within the multi-cast capable distribution network.

31. The system of claim 29 wherein the multicast capable distribution network is configured for dynamically enabling access to said control service information by downstream apparatuses within the multi-cast capable network.

32. The system of claim 26 wherein enabling the multicast-capable distribution network to facilitate receiving the plurality of requests for reception of a file designated in said control service information includes enabling the multicast-capable distribution network to facilitate receiving said requests within a prescribed interval of time.

33. The system of claim 32 wherein the prescribed interval of time begins at a designated time and extends for a designated duration.

34. The system of claim 32 wherein enabling the multicast-capable distribution network to facilitate receiving the plurality of requests for reception of a file designated in said control service information includes enabling the multicast-capable distribution network to facilitate synchronization of the group of said end user download devices for enabling reception of said requests by the multicast-capable distribution network within the prescribed interval of time.

35. The system of claim 34 wherein enabling the multicast-capable distribution network to facilitate synchronization of the group of said end user download devices includes enabling the multicast-capable distribution network to facilitate:
synchronizing a clock of each one of said end user download devices with a reference time maintained by the multicast-capable distribution network; and
synchronizing a clock of a multicast server apparatus with the reference time maintained by the multicast-capable distribution network.

36. The system of claim 26 wherein the data processor program is further capable of enabling the distribution network to facilitate:
synchronization of the group of said end user download devices for enabling reception of said requests by the multicast-capable distribution network within a prescribed interval of time.

37. The system of claim 36 wherein:
enabling the multicast-capable distribution network to facilitate receiving the plurality of requests for reception of a file designated in said control service information includes enabling the multicast-capable distribution network to facilitate receiving said requests within the prescribed interval of time; and
the prescribed interval of time beginning at a designated time and extending for a designated duration.

38. The system of claim 26 wherein:
the multicast-capable distribution network is an Internet Protocol (IP) based distribution network; and
enabling the multicast-capable distribution network to facilitate receiving the plurality of requests for reception includes enabling the multicast-capable distribution network to facilitate receiving an Internet Group Management Protocol IGMP membership report from each one of the group of said end user download devices.

39. The system of claim 38 wherein the data processor program is further capable of enabling the multicast-capable distribution network to facilitate:
receiving said control service information from a centralized control apparatus in response to receiving the IGMP membership report from each one of the group of said end user download devices.

40. The system of claim 26 wherein enabling the multicast-capable distribution network to facilitate multicasting said offered content includes enabling the multicast-capable distribution network to facilitate:
receiving an initially transmitted copy of said offered content from a centralized control apparatus;
generating replicated versions of said offered content, wherein said replicated versions are generated by the multicast-capable distribution network; and
forwarding said replicated versions of said offered content for reception by each one of the group of said end user download devices.

41. A data processor program product for facilitating multicasting of a file to a plurality of end users, comprising:
a data processor program processable by a data processor of a multicast-capable distribution network;
an apparatus from which the data processor program is accessible by the data processor; and
the data processor program being capable of enabling the data processor to facilitate multicasting control service information for reception by a plurality of end user download devices;
receiving a plurality of requests for reception of offered content designated in said control service information, wherein said requests are received from a group of said end user download devices; and
multicasting said offered content for reception by each one of said end user download devices in the group.

42. The data processor program product of claim 41 wherein enabling the data processor to facilitate multicasting control service information includes enabling the data processor to facilitate:
receiving said control service information initially transmitted from a centralized control apparatus;
generating replicated versions of said control service information, wherein said replicated versions are generated by the multicast-capable distribution network; and
forwarding said replicated versions of said control service information for reception by each one of the group of said end user download devices.

43. The data processor program product of claim 42 wherein enabling the data processor to facilitate receiving said control service information from the centralized control apparatus includes enabling the data processor to facilitate receiving an unsolicited advertisement of said control service information from the centralized control apparatus.

44. The data processor program product of claim 42 wherein the data processor program is further capable of enabling the data processor to facilitate:
configuring the multicast-capable distribution network to route said control service information by downstream apparatuses within the multi-cast capable network in response to receiving said control service information.

45. The data processor program product of claim 44 wherein enabling the data processor to facilitate configuring the multicast-capable distribution network includes enabling the data processor to facilitate statically configuring the multicast-capable distribution network for routing said control service information along pre-defined paths within the multi-cast capable distribution network.

46. The data processor program product of claim 44 wherein enabling the data processor to facilitate configuring the multicast-capable distribution network includes enabling the data processor to facilitate dynamically enabling the multicast-capable distribution network for accessing said control service information by downstream apparatuses within the multi-cast capable network.

47. The data processor program product of claim 41 wherein enabling the data processor to facilitate receiving the plurality of requests for reception of a file designated in said control service information includes enabling the data processor to facilitate receiving said requests within a prescribed interval of time.

48. The data processor program product of claim 47 wherein the prescribed interval of time begins at a designated time and extends for a designated duration.

49. The data processor program product of claim 47 wherein enabling the data processor to facilitate receiving the plurality of requests for reception of a file designated in said control service information includes enabling the data processor to facilitate synchronization of the group of said end user download devices for enabling reception of said requests by the multicast-capable distribution network within the prescribed interval of time.

50. The data processor program product of claim 49 wherein enabling the data processor to facilitate synchronization of the group of said end user download devices includes enabling the data processor to facilitate:
synchronizing a clock of each one of said end user download devices with a reference time maintained by the multicast-capable distribution network; and
synchronizing a clock of a multicast server apparatus with the reference time maintained by the multicast-capable distribution network.

51. The data processor program product of claim 41 wherein the data processor program is further capable of enabling the distribution network to facilitate:
synchronization of the group of said end user download devices for enabling reception of said requests by the multicast-capable distribution network within a prescribed interval of time.

52. The data processor program product of claim 51 wherein:
enabling the data processor to facilitate receiving the plurality of requests for reception of a file designated in said control service information includes enabling the data processor to facilitate receiving said requests within the prescribed interval of time; and
the prescribed interval of time beginning at a designated time and extending for a designated duration.

53. The data processor program product of claim 41 wherein:
the multicast-capable distribution network is an Internet Protocol (IP) based distribution network; and
enabling the data processor to facilitate receiving the plurality of requests for reception includes enabling the data processor to facilitate receiving an Internet Group Management Protocol IGMP membership report from each one of the group of said end user download devices.

54. The data processor program product of claim 53 wherein the data processor program is further capable of enabling the data processor to facilitate:
receiving said control service information from a centralized control apparatus in response to receiving the IGMP membership report from each one of the group of said end user download devices.

55. The data processor program product of claim 41 wherein enabling the data processor to facilitate multicasting said offered content includes enabling the data processor to facilitate:
receiving an initially transmitted copy of said offered content from a centralized control apparatus; generating replicated versions of said offered content, wherein said replicated versions are generated by the multicast-capable distribution network; and
forwarding said replicated versions of said offered content for reception by each one of the group of said end user download devices.
